# EUROPEAN PATENT SPECIFICATION

(11) **EP 4 179 595 B1**
(45) Date of publication and mention of the grant of the patent: **24.01.2024**
(21) Application number: 20739665.6
(22) Date of filing: 10.07.2020
(51) Int. Cl.: H01M 50/342, H01M 50/213, H01M 50/24

(54) **BATTERY DEVICE**
BATTERIEVORRICHTUNG
DISPOSITIF DE BATTERIE

(43) Date of publication of application: 17.05.2023
(73) Proprietor: Polarium Energy Solutions AB, 113 63 Stockholm (SE)
(72) Inventor: KULLBERG, Johan, 113 63 Stockholm (SE); LINDGREN, Kenneth, 113 63 Stockholm (SE); KROHN, Ulf, 113 63 Stockholm (SE)
(74) Representative: AWA Sweden AB
(86) International application number: PCT/EP2020/069604
(87) International publication number: WO 2022/008080

(56) References cited:
- WO-A1-2018/134704
- US-A1- 2018 138 478

## Description

### Technical field

The present disclosure relates generally to the field of batteries. More specifically, it relates to reducing fire propagation in a battery cell pack.

### Background

In recent years, the demand for battery devices has increased rapidly all over the world. Efficient batteries are needed in vehicles, in mobile devices and as backup solutions to support necessary functions in case of power failure or cut.

If a battery cell experiences a critical malfunction, it may go into thermal runaway. In this state, combustion gases and flames may develop, which may in turn affect other equipment near the affected cell. As several battery cells are often arranged together in a battery device, combustion gases or flames resulting from the thermal runaway of one cell may propagate to other cells. Such a chain reaction of malfunctioning cells may lead to a larger malfunction or to the entire battery cell pack or device catching fire or exploding. WO 2018/134704 A1 and US 2018/138478 A1 disclose battery devices comprising a structure on top of the battery celss which provides a ventilation passage.

### Summary

It is therefore an object of the present invention to overcome at least some of the above-mentioned drawbacks, and to provide an improved battery device. A battery device according to claim 1 is provided.

The battery device comprises a battery cell pack, which includes a plurality of battery cells. The battery cell pack may also be referred to as the cell pack or assembly of battery cells.

The battery device further includes a structure which is disposed on top of the battery cell pack. The structure includes an insulating material.

The battery device further comprises a housing, in which the battery cell pack and the structure are arranged.

At least an upper surface of the structure has heat- and fire-resistant properties. The insulating material includes a plurality of weakened portions or cuts, which extend through the insulating material. The structure is arranged (or positioned) such that, in case a cell of the plurality of battery cells burns out (goes into thermal runaway, overheats), a ventilation passage is formed over the cell through a weakened portion or cut in the insulating material.

The upper/top surface of the structure is the surface furthest away from the battery cell pack, and the lower/bottom surface of the structure is the surface which is closest to the battery cell pack. These terms are used throughout this disclosure to describe the internal relationship between the different elements/features of the battery device, in accordance with different embodiments. The terms upper/lower, up/down, top/bottom etc. do not necessarily define the location or orientation of the elements in a larger reference frame, such as their orientation with respect to the earth.

In case of a cell of the plurality of battery cells goes into thermal runaway, or burns out, hot combustion gases and/or flames may be generated in/by the cell. Many battery cells release such gases/flames in a longitudinal direction, rather than a lateral direction (towards neighboring battery cells). For example, battery cells may have internal features preventing the side-way release of flames/gases. Alternatively, external features, such as holding features, may have the same anti-flame/gas spreading effect.

The structure arranged on top of the battery cell pack prevents fire spreading between cells in the battery cell pack. The structure is arranged such that the insulating material prevents fire and combustion gases from reaching cells adjacent to the cell burning out (the affected/critical cell) from above. The ventilation passage, formed over the critical cell through the weakened portions or cuts in the insulating material, provides a channel through which the gases and flames escape/are released above the structure. The structure then forms a barrier between the flames/gases and the battery cell pack. The flame- and heat-resistant properties of the upper surface of the structure thus prevents flames and gas to reach the other battery cells of the battery cell pack, thereby limiting failure and destruction of the battery cell pack.

The ventilation passage is formed through the weakened portions or cuts in the insulating material due to an increase in pressure caused by the formation of the flames and gases. For example, when the pressure increases, the pre-cuts or weakened portions above the affected (burning out) cell give way (collapse/open) to form the ventilation passage According to some embodiments, the insulating material of the structure may have a thermal conductivity which is lower than, or substantially equal to, 1 W/m·K.

For example, the thermal conductivity of the insulating material may be lower than 0.8 W/m·K, such as (below) 0.5 W/m·K.

A low thermal conductivity of the insulating material may aid in isolating affected cell or keeping other cells in the battery cell pack from being overheated in case of a cell overheating (burning out, going into thermal runaway).

According to some embodiments, the insulating material may be electrically insulating.

When the hot gases and flames go through the ventilation passage, they are released above the structure. The housing, or other equipment within the housing, may be affected by the hot gases and flames, which may for example lead to molten metal or other foreign material falling down on or otherwise coming in contact with the upper surface of the structure. Embodiments in which the insulating material is electrically insulating, or non-conductive, may prevent electrical shortcuts between cells or between the battery cell pack and other components/equipment due to such foreign material.

According to some embodiments, the insulating material may be resistant to temperatures of at least 800°C.

The insulating material may further be resistant to temperatures of at least 800°C for at least 60 seconds.

For example, the insulating material may be resistant to temperatures of at least 900°C, such as 1000°C.

According to some embodiments, a thickness of the insulating material may be in the range 0.5-4 mm.

For example, the thickness may be in the range 0.7-3.5 mm. More specifically, the thickness may be in the range 1-3 mm.

According to some embodiments, the insulating material may comprise a fluoroelastomer material.

For example, the insulating material may comprise an FKM or an FFKM (a perfluoroelastomer). Such materials may have heat-resistant and electrically insulating properties.

According to the present invention, the structure includes a cover layer or coating forming the heat- and fire-resistant upper surface of the structure. The cover layer comprises a heat- and fire-resistant material.

The cover layer (or coating) further comprises a plurality of weakened portions or pre-cuts which form flaps (doors/covers/ports). The ventilation passage further includes an opened flap of the plurality of flaps which are formed by weakened portions or pre-cuts in the cover layer or coating, as the flaps are openable by an increase in pressure resulting from the burn-out (thermal runaway) of the cell.

The flaps are formed by forming (cutting) pre-cuts, partially or all the way through the cover layer or coating. Alternatively, the flaps are formed by weakening portions of the material of the cover layer or coating.

A weakened portion or pre-cut may form at least parts of a contour or trace of a shape, such as a circle, oval, square etc., giving the flap its shape.

The cover layer/coating may be formed (or arranged/positioned) such that a flap is located over a weakened portion/pre-cut in the insulating material, which in turn is arranged (or positioned) over a battery cell. Thus, the flap may open due to an increase in pressure resulting from the burnout of the cell below the flap in question.

Upon opening, the flap may be entirely released from the cover layer/coating. Alternatively, the flap may still be partially attached to the cover layer/coating, and open like a door.

According to some embodiments, the cover layer or coating may be electrically insulating.

A cover layer/coating comprising an electrically insulating material may protect the insulating material from foreign material which may come into contact with the cover layer/coating, e.g. due to combustion gases or flames. Embodiments in which the cover layer/coating is electrically insulating, or non-conductive, may prevent electrical shortcuts between cells or between the battery cell pack and other components/equipment.

According to some embodiments, the cover layer or coating may be resistant to temperatures of at least 1000°C for at least 15 seconds.

For example, the cover layer/coating may be resistant to 1200°C for at least 15 seconds. More specifically, the cover layer/coating may be resistant to 1500°C for at least 15 seconds.

For example, the cover layer/coating may be resistant to 1000°C for at least 20 seconds. More specifically, the layer/coating may be resistant to 1000°C for at least 30 seconds.

According to the present invention, the cover layer or coating comprises or consists of mica or a ceramic.

Materials such as mica or a ceramic provide thin layers/coatings having heat- and fire-resistant properties.

According to some embodiments, the cover layer or coating may have a thickness such that the flaps are openable by an increase in pressure resulting from the burn-out of the cell.

For example, in embodiments in which the flaps of the cover layer/coating, when in an opened state, are still partially attached to the cover layer/coating, the thickness of the cover layer/coating may be adapted such that the portion of the flap which is still in contact with the cover layer/coating may be bent upwards (to open the flap) by the pressure increase resulting from the malfunction of a cell below.

According to some embodiments, a thickness of the cover layer or coating may be smaller than 300 µm.

For example, the cover layer/coating may have a thickness which is lower than 250 µm. More specifically, the cover layer/coating may have a thickness which is lower than 200 µm, such as 180 µm.

According to some embodiments, the structure may further comprise an adhesive for attaching the insulating material with the cover layer or coating. The adhesive may form part of the cover layer/coating, or of the insulating material. Alternatively, the adhesive may form a separate layer/coating. Bubbles/pockets comprising e.g. air may form between the cover layer/coating and the insulating layer, such bubbles/pockets may increase the risk of fire spreading sideways underneath the cover layer/coating. Attaching the insulating material with the cover layer using an adhesive may lower the risk of (air) bubbles/pockets forming between the insulating material and the cover layer/coating.

According to the present invention, the structure further comprises an electrically conductive layer which is in contact with the battery cell pack to electrically connect the plurality of battery cells. The electrically conductive layer comprises a plurality of openings, and the ventilation passage may further include an opening of the plurality of openings in the electrically conductive layer.

For example, the electrically conductive layer (and/or the structure as a whole) may be arranged/positioned such that at least one opening is arranged/positioned above each battery cell of the battery cell pack. It will, however, be appreciated that the electrically conductive layer may be in direct or indirect electrical contact with each battery cell that is electrically connected by the electrically conductive layer.

The electrically conductive layer may for example comprise nickel. The electrically conductive layer may for example have a thickness smaller than 0.3 mm, such as 0.2 mm or 0.15 mm.

According to some embodiments, a first side of the insulating material may be arranged in physical contact with the electrically conductive layer, and a second side, opposite to the first side, may be arranged in physical contact with the cover layer or coating.

In other words, there are no other layers formed in between the insulating material and the conductive layer, nor between the insulating layer and the cover layer/coating.

According to some embodiments, the structure may further comprise an adhesive for attaching the insulating material with the electrically conductive layer.

Bubbles/pockets comprising e.g. air may form between the electrically conductive layer and the insulating layer/material, such bubbles/pockets may increase the risk of fire spreading sideways between the electrically conductive layer and the insulating material. Attaching the insulating material with the electrically conductive layer using an adhesive may lower the risk of (air) bubbles/pockets forming between the insulating material and the electrically conductive layer.

In some embodiments, an adhesive may be used to attach the first side of the insulating material with the electrically conductive layer, and/or another adhesive may be used to attach the second side of the insulating material with the cover layer/coating.

According to some embodiments, the cell of the plurality of battery cells (i.e. the cell over which the ventilation passage is formed) may comprise a ventilation port adapted for releasing internal pressure and/or gas. The ventilation port may be in fluid communication with the ventilation passage.

The ventilation port (vent, outlet) may be comprised in an upper portion of the battery cell, such as in an upper surface of the battery cell. The vent port may lead combustion gases and flames upwards, into the ventilation passage.

It will be appreciated that some or all of the battery cells may comprise such a ventilation port.

Similarly, it will be appreciated that, on a more general level, the structure may be disposed on the battery cell pack (e.g. aligned with the cells of the battery cell pack) such that a ventilation passage is formed over every cell, or at least each of a plurality of cells, of the battery cell pack in case of thermal runaway (burnout) of the cell in question.

According to some embodiments, the cell of the plurality of battery cells may comprise a heat- and fire-resistant sidewall.

The sidewall may form a shield between the cell and other battery cells of the battery cell pack. It will be appreciated that some, or all, of the battery cells of the battery cell pack may each comprise a heat- and fire-resistant sidewall. Such a sidewall/shield may reduce the risk that flames and heated gases spread sideways to other cells adjacent to a malfunctioning cell.

The heat- and fire-resistant sidewall may be provided inside an outer surface of the battery cell, may form part of an outer surface of the battery cell, or may be provided on an outer surface of the battery cell.

The sidewall may for example comprise or consist of mica or a ceramic.

According to some embodiments, the battery device may further comprise a metal framework. The metal framework may comprise a plurality of compartments adapted for insertion of individual battery cells.

The metal framework may act as a holding means, keeping the battery cells in place.

If the cell function fails (or if a cell is subject to a thermal runaway), the cell might rupture in the side and this may cause multiple adjacent cells to fail. The metal framework may act as a shield, separating a battery cell from other battery cells of the battery cell pack. Such a shield may provide that flames and heated gases do not spread sideways to other cells adjacent to a malfunctioning cell.

In addition, battery cells may reach high temperatures, even without failing. A metal framework may help address thermal issues which are common problems in cell packs with high energy density.

According to some embodiments, the metal framework may comprise a metal having a thermal conductivity of at least 150 W/m·K.

For example, the metal framework may comprise a metal having a thermal conductivity of at least 180 W/m·K. More specifically, the metal framework may comprise a metal having a thermal conductivity of at least 200 W/m·K, such as aluminium having a thermal conductivity of 247 W/m·K.

Metal frameworks comprising a metal having a high thermal conductivity (such as ≥150 W/m·K) may conduct heat away from a malfunctioning cell. Such frameworks may provide that thermal distribution within the pack is even, which may minimize the risk for thermal runaway and prolong cell life.

The metal framework may conduct heat to a specific area, in which different climate control measures can be taken, such as convectional cooling, active cooling, or heating.

According to some embodiments, the battery device may further include a cooling element arranged in thermal connection with the metal framework. For example, the housing of the battery device may further comprise a heatsink arranged in thermal connection with the metal framework. In general, the operation principle of the cooling element may be based on passive or active cooling. As an alternative to a heatsink in the form of, for example, a metallic wall of the housing, the cooling element may be based on piezo-electric cooling, evaporative cooling, or the use of a cooling liquid.

These embodiments provide improved thermal management within the battery device in that the metal framework can conduct heat to the cooling element at which cooling may take place.

Metal frameworks, in accordance with the above described embodiments, may thus prevent thermal runaway of a cell by levelling out the temperature over the battery cell pack or conducting the heat to an area in which cooling can take place. The metal frameworks may further protect the cells surrounding/ adjacent to a malfunctioning cell, by forming a physical barrier preventing the spread of flames and/or gases, and/or by conducting heat away from the affected cell.

It is noted that other embodiments using all possible combinations of features recited in the above described embodiments may be envisaged. Thus, the present disclosure also relates to all possible combinations of features mentioned herein.

### Brief description of drawings

Exemplifying embodiments will now be described in more detail, with reference to the following appended drawings:
Figure 1 is a schematic illustration of a battery device, in accordance with some embodiments;
Figure 2 is a schematic illustration of a structure, in accordance with some embodiments;
Figure 3 is a schematic illustration of a battery cell pack and a structure, in accordance with some embodiments;
Figure 4 is an illustration of a metal framework, in accordance with some embodiments;
Figure 5 is a schematic illustration of a battery cell pack, a structure, a framework and a cooling element in the form of a heatsink in accordance with some embodiments; and
Figure 6 is an illustration of a battery cell pack, a structure, a framework and a cooling element in the form of a heatsink in accordance with some embodiments.

As illustrated in the figures, the sizes of the elements and regions may be exaggerated for illustrative purposes and, thus, are provided to illustrate the general structures of the embodiments. Like reference numerals refer to like elements throughout.

### Detailed description

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness.

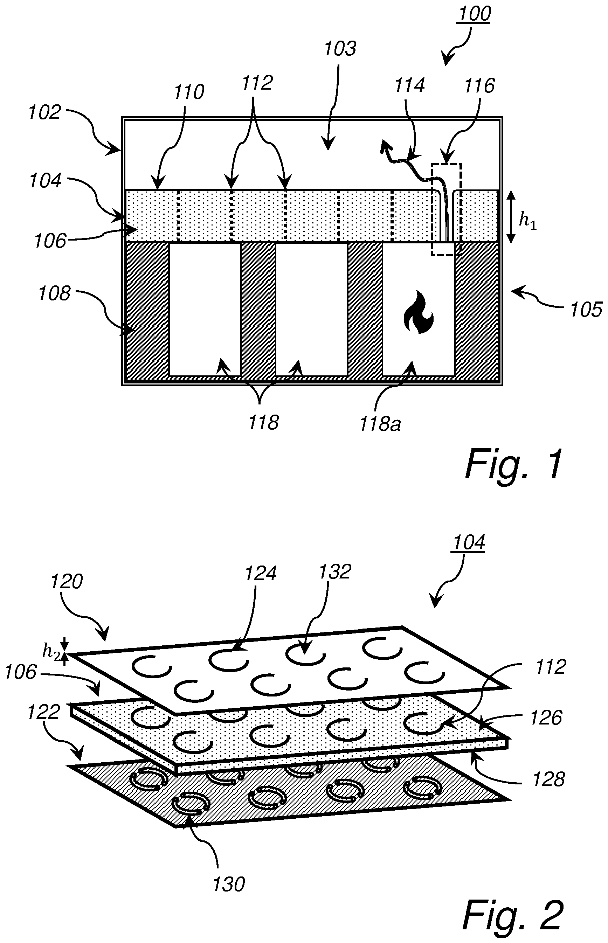

With reference to Figure 1, a battery device, in accordance with some embodiments, will be described.

Figure 1 is a schematic illustration of a cross-section of a battery device 100. The battery device 100 comprises a housing 102 inside of which a battery cell pack 105 and a structure 104 are arranged.

The battery cell pack 105 comprises a plurality of battery cells 118, 118a. The battery cell pack further comprises (optional) holding means 108 for keeping the battery cells 118, 118a in place. Different kinds of holding means for arranging battery cells in a battery cell pack may be used. In the present figure, the holding means 108 surrounds at least a portion of each battery cell 118, 118a, for keeping the battery cell 118, 118a in place.

The structure 104 is arranged on top of the battery cell pack 105. The structure comprises an insulating material 106 and has a top surface 110 which has flame- and heat-resistant properties. The insulating material 106 has a plurality of weakened portions or pre-cuts 112, which extend through the insulating material 106, from a bottom surface (in contact with the battery cells 118, 118a and the holding means 108) to the top surface 110. The insulating material has a thickness *h*₁ which may for example be in the range 0.5-4 mm. The structure 104 is positioned such that (in the illustrated cross-section), two weakened portions or pre-cuts 112 are arranged above each battery cell 118.

To illustrate the principle of the protection provided by the structure 104, it may be assumed that one of the battery cells 118a has malfunctioned and is in thermal runaway (or burning out), which is symbolised with a flame. As a result of the cell 118a burning out, gases and flames 114 have been formed, and pressure has increased within the cell 118a. The insulating material 106 keeps the flames and gases 114 from reaching the other cells 118 of the battery cell pack 105. The pressure from the gases/flames 114 has formed a ventilation passage 116 through a weakening/pre-cut in the insulating material 106 above the malfunctioning cell 118a, through which the gases/flames 114 can escape to a volume 103 above the structure 104, i.e. a space within the housing 102 located between an upper surface of the structure 104 and a wall of the housing 102.

When the pressure (and temperature) increases, the insulating material 106 above the battery cell 118a may for example collapse on top of the battery cell 118a. For example, the material in the weakened portions/pre-cuts or between weakened portions/pre-cuts may collapse. This collapse may leave an opening in the layer of insulating material 106, through which the gases/flames 114 may escape, thereby forming (a part of) the ventilation passage 116.

Alternatively, the increased pressure/temperature may widen a pre-cut extending all the way through the insulating material, thereby forming a channel (ventilation passage 116) through which the gas/flames 114 may be released above the structure.

Furthermore, the increased pressure of the heated gases/flames lead to the weakest portion of the walls confining the gas/flames (i.e. the weakened portions/pre-cuts 112) giving a possibility to release the gas/flames 114.

Once the gases/flames 114 have passed through the ventilation passage, the gases and flames 114 will be separated from the other cells 118 by the structure 104. The heat- and fire-resistant upper surface 110 of the structure, and the insulating material 106 will protect the cell package/battery cell pack from further propagation of fire.

With reference to Figure 2, a structure, in accordance with some embodiments, will be described.

Figure 2 is an exploded schematic illustration of a structure 104. The structure 104 may be equivalent to the structure 104 described with reference to Figure 1, except in that it is formed of a cover layer/coating 120, the insulating material 106 and an electrically conductive layer 122.

The cover layer/coating 120 comprises a heat- and fire-resistant material and forms the heat- and fire-resistant top surface of the structure 104. The cover layer/coating 120 further comprises a plurality of weakened portions/pre-cuts 124. The weakened portions/pre-cuts 124 are each shaped to form a flap 132. A thickness *h*₂ of the cover layer/coating 120 is such that an increase in pressure below a flap 132 of the cover layer/coating 120 may open the flap 132. For example, the thickness *h*₂ which may be smaller than 300 µm.

The cover layer/coating 120 is arranged in contact with an upper surface 126 of the insulating material 106. The insulating material 106 comprises a plurality of weakened portions/pre-cuts 112. The structure 104 is preferably assembled or arranged such that each weakened portion/pre-cut 112 in the insulating material 106 is aligned with a respective corresponding weakened portion/pre-cut 124 in the cover layer/coating 120. A lower surface 128 of the insulating material 106, the lower surface 128 being opposite the upper surface 126, is arranged in contact with the electrically conductive layer 122 comprising a plurality of openings 130. Again, the structure 104 is preferably assembled or arranged such that each opening 130 in the electrically conductive layer 122 is aligned with a respective corresponding weakened portion/pre-cut 112 in the insulating material 106. Accordingly, an arbitrary weakened portion/pre-cut 124 in the cover layer/coating 120 is arranged coaxially with a respective corresponding weakened portion/pre-cut 112 in the insulating material 106 and a respective corresponding of opening 130 in the electrically conductive layer 122.

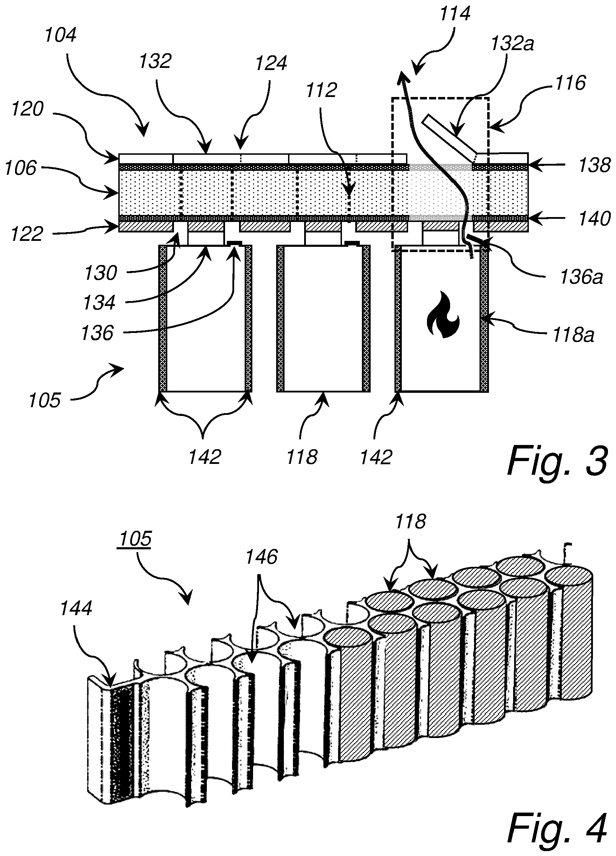

With reference to Figure 3, a battery device, in accordance with some embodiments, will be described.

Figure 3 is a schematic illustration of a structure 104 arranged over a battery cell pack 105.

The structure 104 comprises a cover layer/coating 120, an insulating material 106, and an electrically conductive layer 122. An adhesive 138 is provided between the cover layer/coating 120 and the insulating material 106 for attaching the cover layer/coating 120 to the insulating material 106. Furthermore, an adhesive 140 is provided between the insulating material 106 and the electrically conductive layer 122 for attaching the electrically conductive layer 122 to the insulating material 106. The adhesives 138, 140 described above may each be provided in the form of an adhesive layer.

The cover layer/coating 120 comprises a plurality of weakened portions/pre-cuts 124. The weakened portions/pre-cuts 124 are each shaped to form a flap 132. In the illustrated embodiment, the weakened portions/pre-cuts 124 extend through the full thickness of the cover layer/coating 120. Furthermore, the insulating material 106 comprises a plurality of weakened portions/pre-cuts 112, and the electrically conductive layer 122 comprises a plurality of openings 130. The weakened portions/pre-cuts and openings may be aligned as described in conjunction with figure 2.

A connection 134 is formed between the battery cell and the electrically conductive layer 122. The electrically conductive layer 122 here provides for electrically connecting each battery cell of the battery cell pack with one another (either serially or in parallel). The battery cell 118 comprises a ventilation port 136 adapted for releasing internal pressure and/or gas. The leftmost battery cell 142 depicted in figure 3 is shown with a closed ventilation port 136.

With reference to the battery cell denoted 118a, events following a malfunctioning or burned out of the battery cell will now be described. Upon burning out, the battery cell 118a generates heated gases (and/or flames) 114 which may cause the ventilation port 136a to enter an opened state due to the increased pressure within the battery cell 118a. Pressure exerted by the released gases 114 will then enter the corresponding opening of the electrically conductive layer 122, above the battery cell 118a, and cause the weakened portion/pre-cut in the isolating material 106 above the opening to rupture (collapse) or open, thereby allowing the gases 114 to pass through the isolating material 106 to the cover layer/coating 120. Similarly, the pressure of the gases 114 will cause the weakened portion/pre-cut in the cover layer/coating corresponding to the battery cell 118a to rupture or open, forming an opened flap 132a, thereby allowing the gases 114 to exit the structure 104 via the opening left by the opened flap 132a. A ventilation passage 116 has thus been formed in the structure 104, extending over the electrically conductive layer 122, the isolating material 106, and the cover layer/coating 120.

As the hot gases reach the space between the structure and the housing of the battery cell (not shown in Fig. 3), these gases may cause metallic particles from the housing or other elements of the battery device to melt and fall on the structure. However, as the top surface of the structure, which in the embodiment illustrated in Fig. 3 corresponds to the cover layer/coating 120 (which for example may be a ceramic or mica), such metallic particles or the like falling on the structure will not affect the rest of the structure and, in particular, prevent that the fire propagates to other cells.

Both the insulating layer 106 and the cover layer 120 prevent a lateral propagation of a malfunction (or fire) occurring in a cell. The insulating layer provides a ventilation passage upwards such that a fire is not propagated laterally and the cover layer/coating 120 protects the insulating layer from above in order to prevent that the insulating layer is damaged by other elements falling on the structure. The cover layer/coating 120 also provides protection against undesired electrical shortcuts.

Each battery cell here further comprises a heat- and fire-resistant sidewall 142.

With reference to Figure 4, a metal framework 144, in accordance with some embodiments, will be described.

Figure 4 is an illustration of a battery cell pack 105. The battery cell pack 105 comprises a plurality of battery cells 118. As can be seen, each battery cell 118 is arranged in a respective compartment 146 of the metal framework 144. The plurality of compartments 146 are preferably shaped to correspond to the shape of the battery cells 118. Here, the plurality of compartments 146 are cylinder shaped. As illustrated, the metal framework 144 further does not necessarily cover all surfaces of each battery cell 118. Preferably, the metal framework 144 provides cover and protection of the side surfaces of each battery cell 118. In addition, the metal framework 144 improves thermal management both in case of thermal runaway in one of the battery cells and in normal operation of the battery cells such as when charging and/or discharging the battery cells.

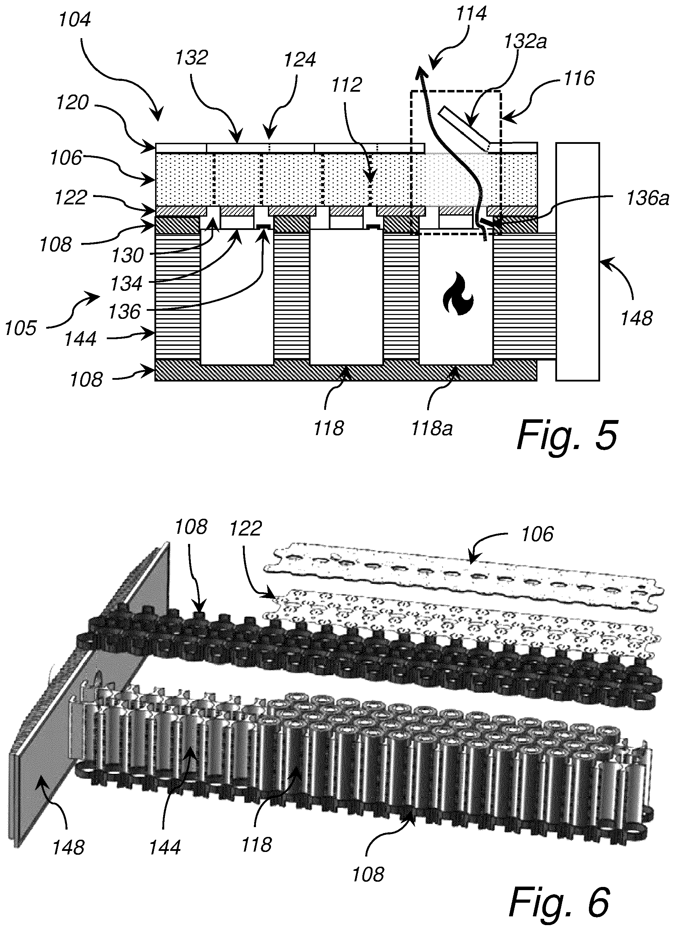

With reference to Figure 5, a battery device, in accordance with some embodiments, will be described.

Figure 5 is a schematic illustration of a structure 104, a battery cell pack 105, a metal framework 144, and a cooling element such as a heatsink 148. The structure 104 comprises a cover layer/coating 120, an insulating material 106, and an electrically conductive layer 122.

The cover layer/coating 120 comprises a plurality of weakened portions/pre-cuts 124. The weakened portions/pre-cuts 124 are each shaped to form a flap 132. In the illustrated embodiment, the weakened portions/pre-cuts 124 extend through the full thickness of the cover layer/coating 120. Furthermore, the insulating material 106 comprises a plurality of weakened portions/pre-cuts 112, and the electrically conductive layer 122 comprises a plurality of openings 130. The weakened portions/pre-cuts and openings may be aligned as described in conjunction with figure 2.

A connection 134 is formed between the battery cell and the electrically conductive layer 122. The electrically conductive layer 122 here provides for electrical connection of each battery cell of the battery cell pack with one another. The battery cell 118 comprises a ventilation port 136 adapted for releasing internal pressure and/or gas. The leftmost battery cell depicted in figure 3 is shown with a closed ventilation port 136.

The battery cell pack 105 comprises a plurality of battery cells 118, 118a. The battery cell pack further comprises (optional) holding means 108 for keeping the battery cells 118, 118a in place. Different kinds of holding means for arranging battery cells in a battery cell pack may be used. In the present figure, the holding means 108 surrounds at least a portion of each battery cell 118, 118a, for keeping the battery cells 118, 118a in place. It is to be understood that the holding means 108 may comprise several separate pieces, as is more clearly illustrated in figure 6.

In general, the structure 104 of the embodiment shown in Figure 5 may be equivalent to the structure 104 described with reference to Figures 1-3. Similarly, the battery device of the embodiment shown in Figure 5 may be equivalent to the battery device described in the preceding embodiments with reference to Figures 1-3 except that a metal framework 144 is further provided.

The metal framework 144 provides compartments adapted to hold a single battery cell. The metal framework 144 is further connected to a heatsink 148. Thus, heat generated by the battery cells may be conducted via the metal framework 144 to the heatsink 148 for heat control of the battery cells. As an alternative to, or in addition to, the passive cooling provided by the heatsink 148 depicted in Figure 5, the cooling element may be based on active cooling such as, by way of example, piezo-electric cooling, evaporative cooling, or the use of a cooling liquid.

With reference to battery cell 118a, events following a malfunctioning or burned out battery cell will now be described. Upon burning out, the battery cell 118a generates heated gases (and/or flames) 114 which may cause the ventilation port 136a to enter an opened state due to the increased pressure within the battery cell 118a. Pressure exerted by the released gases 114 will then enter the corresponding opening of the electrically conductive layer 122, above the battery cell 118a, and cause the weakened portion/pre-cut in the isolating material 106 above the opening to rupture or open, thereby allowing the gases 114 to pass through the isolating material 106 to the cover layer/coating 120. Similarly, the pressure of the gases 114 will cause the weakened portion/pre-cut in the cover layer/coating corresponding to the battery cell 118a to rupture or open, forming an opened flap 132a, thereby allowing the gases 114 to exit the structure 104 via the opening left by the opened flap 132a. A ventilation passage 116 has thus been formed in the structure 104, extending over the electrically conductive layer 122, the isolating material 106, and the cover layer/coating 120.

With reference to Figure 6, a battery device, in accordance with some embodiments, will be described.

Figure 6 is an illustration of a structure 104, a battery cell pack 105, a metal framework 144 and a heatsink 148. In general, Figure 6 illustrates the embodiment of Figure 5 in a perspective view. Holding means 108 can here be more clearly seen, holding the battery cells 118. The holding means 108 here comprises an upper holding unit and a lower holder unit, arranged to engage with an upper and a lower portion, respectively, of each battery cell. The electrically conductive layer 122 and isolating material 106 are also visible in the depicted view.

The person skilled in the art realizes that the present invention by no means is limited to the preferred embodiments described above. On the contrary, many modifications and variations are possible within the scope of the appended claims.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A battery device (100) comprising:
a battery cell pack (105) including a plurality of battery cells (118);
a layered structure (104) disposed on top of the battery cell pack, said structure including an electrically conductive layer (122), an insulating material (106), and a cover layer (120) or coating forming an upper surface of the layered structure; and
a housing (102), in which said battery cell pack and said structure are arranged; wherein
said electrically conductive layer is arranged in contact with the battery cell pack to electrically connect the plurality of battery cells, and said electrically conductive layer comprises a plurality of openings (130);
said insulating material includes a plurality of weakened portions or cuts (112) extending through the insulating material;
said cover layer or coating includes a heat- and fire-resistant material comprising mica or a ceramic, and further comprises a plurality of weakened portions or pre-cuts (124) forming flaps (132), a flap being openable by an increase in pressure resulting from burn-out of a battery cell; and
said structure is arranged such that, in case of burnout of a cell (118a) of said plurality of battery cells, a ventilation passage (116) is formed over said cell through:
an opening of said plurality of openings in said electrically conductive layer,
a weakened portion or cut in said insulating material, and
an opened flap (132a) of said flaps in the cover layer or coating.

2. The battery device of claim 1, wherein said insulating material has a thermal conductivity which is lower than or substantially equal to 1 W/m·K.

3. The battery device of any of the preceding claims, wherein said insulating material is electrically insulating.

4. The battery device of any of the preceding claims, wherein a thickness (*h*₁) of said insulating material is in the range 0.5-4 mm.

5. The battery device of any of the preceding claims, wherein said insulating material comprises a fluoroelastomer material.

6. The battery device of any of the preceding claims, wherein said cover layer or coating is electrically insulating.

7. The battery device of any of the preceding claims, wherein said cover layer or coating has a thickness (*h*₂) such that said flaps are openable by an increase in pressure resulting from said burn-out of the cell.

8. The battery device of any of the preceding claims, wherein a thickness of the cover layer or coating is smaller than 300 µm.

9. The battery device of any of the preceding claims, wherein said structure further comprises an adhesive (138) to attach said insulating material with said cover layer or coating.

10. The battery device of any of the preceding claims, wherein a first side (126) of the insulating material is arranged in physical contact with the electrically conductive layer and a second side (128), opposite to the first side, is arranged in physical contact with the cover layer or coating.

11. The battery device of any of the preceding claims, wherein said layered structure further comprises an adhesive (140) to attach said insulating material with said electrically conductive layer.

12. The battery device of any of the preceding claims, wherein said cell of said plurality of battery cells comprises a ventilation port (136) adapted for releasing internal pressure and/or gas; and wherein said ventilation port is in fluid communication with said ventilation passage.

13. The battery device of any of the preceding claims, wherein said cell of said plurality of battery cells comprises a heat- and fire-resistant sidewall (142).

14. The battery device of any of the preceding claims, further comprising a metal framework (144), wherein
said metal framework comprises a plurality of compartments (146) adapted for insertion of individual battery cells.

15. The battery device of claim 14, wherein said metal framework comprises a metal having a thermal conductivity of at least 150 W/m·K.

16. The battery device of any of the claims 14-15, further comprising a cooling element (148) arranged in thermal connection with said metal framework.

## Patentansprüche

1. Batterievorrichtung (100), umfassend:
ein Batteriezellenpaket (105), das eine Mehrzahl von Batteriezellen (118) umfasst;
eine geschichtete Struktur (104), die auf dem Batteriezellenpaket angeordnet ist, wobei die Struktur eine elektrisch leitenden Schicht (122), ein isolierendes Material (106) und eine Deckschicht (120) oder Beschichtung, die eine obere Fläche der geschichteten Struktur bildet, umfasst; und
ein Gehäuse (102), in dem das Batteriezellenpaket und die Struktur angeordnet sind; wobei
die elektrisch leitende Schicht in Kontakt mit dem Batteriezellenpaket angeordnet ist, um die Mehrzahl von Batteriezellen elektrisch zu verbinden, und die elektrisch leitende Schicht eine Mehrzahl von Öffnungen (130) umfasst;
das isolierende Material eine Mehrzahl von geschwächten Abschnitten oder Einschnitten (112) umfasst, die sich durch das isolierende Material erstrecken;
die Deckschicht oder Beschichtung ein wärme- und feuerbeständiges Material umfasst, das Glimmer oder eine Keramik umfasst, und ferner eine Mehrzahl von geschwächten Abschnitten oder Voreinschnitten (124) umfasst, die Klappen (132) bilden, wobei eine Klappe durch eine Erhöhung eines Drucks öffenbar ist, der aus einem Durchbrennen einer Batteriezelle resultiert; und
die Struktur derart angeordnet ist, dass, im Fall eines Durchbrennens einer Zelle (118a) der Mehrzahl von Batteriezellen, ein Entlüftungsdurchgang (116) über der Zelle gebildet wird durch:
eine Öffnung der Mehrzahl von Öffnungen in der elektrisch leitenden Schicht,
einen geschwächten Abschnitt oder Einschnitt in dem isolierenden Material, und
eine geöffnete Klappe (132a) der Klappen in der Deckschicht oder Beschichtung.

2. Batterievorrichtung nach Anspruch 1, wobei das isolierende Material eine thermische Leitfähigkeit aufweist, die kleiner als oder im Wesentlichen gleich 1 W/m·K ist.

3. Batterievorrichtung nach einem der vorhergehenden Ansprüche, wobei das isolierende Material elektrisch isolierend ist.

4. Batterievorrichtung nach einem der vorhergehenden Ansprüche, wobei eine Dicke (*h*₁) des isolierenden Materials im Bereich von 0,5-4 mm liegt.

5. Batterievorrichtung nach einem der vorhergehenden Ansprüche, wobei das isolierende Material ein Fluorelastomermaterial umfasst.

6. Batterievorrichtung nach einem der vorhergehenden Ansprüche, wobei die Deckschicht oder Beschichtung elektrisch isolierend ist.

7. Batterievorrichtung nach einem der vorhergehenden Ansprüche, wobei die Deckschicht oder Beschichtung eine derartige Dicke (*h*₂) aufweist, dass die Klappen durch eine Erhöhung eines Drucks öffenbar sind, der aus dem Durchbrennen der Zelle resultiert.

8. Batterievorrichtung nach einem der vorhergehenden Ansprüche, wobei eine Dicke der Deckschicht oder Beschichtung kleiner als 300 µm ist.

9. Batterievorrichtung nach einem der vorhergehenden Ansprüche, wobei die Struktur ferner einen Klebstoff (138) zum Befestigen des isolierenden Materials an der Deckschicht oder Beschichtung umfasst.

10. Batterievorrichtung nach einem der vorhergehenden Ansprüche, wobei eine erste Seite (126) des isolierenden Materials in physischem Kontakt mit der elektrisch leitenden Schicht angeordnet ist und eine zweite Seite (128) gegenüber der ersten Seite in physischem Kontakt mit der Deckschicht oder Beschichtung angeordnet ist.

11. Batterievorrichtung nach einem der vorhergehenden Ansprüche, wobei die geschichtete Struktur ferner einen Klebstoff (140) zum Befestigen des isolierenden Materials an der elektrisch leitenden Schicht umfasst.

12. Batterievorrichtung nach einem der vorhergehenden Ansprüche, wobei die Zelle der Mehrzahl von Batteriezellen einen Entlüftungsanschluss (136) umfasst, der zum Freigeben von Innendruck und/oder Gas geeignet ist; und wobei der Entlüftungsanschluss in Fluidverbindung mit dem Entlüftungsdurchgang steht.

13. Batterievorrichtung nach einem der vorhergehenden Ansprüche, wobei die Zelle der Mehrzahl von Batteriezellen eine wärme- und feuerbeständige Seitenwand (142) umfasst.

14. Batterievorrichtung nach einem der vorhergehenden Ansprüche, ferner umfassend einen Metallrahmen (144), wobei
der Metallrahmen eine Mehrzahl von Fächern (146) umfasst, die zum Einsetzen einzelner Batteriezellen geeignet sind.

15. Batterievorrichtung nach Anspruch 14, wobei der Metallrahmen ein Metall umfasst, das eine thermische Leitfähigkeit von mindestens 150 W/m·K aufweist.

16. Batterievorrichtung nach einem der Ansprüche 14-15, ferner umfassend ein Kühlelement (148), das in thermischer Verbindung mit dem Metallrahmen angeordnet ist.

## Revendications

1. Dispositif batterie (100), comprenant :
un bloc de cellules de batterie (105) incluant une pluralité de cellules de batterie (118) ;
une structure en couches (104) disposée par-dessus le bloc de cellules de batterie, ladite structure incluant une couche électroconductrice (122), un matériau isolant (106), et une couche (120) ou un revêtement de couverture formant une surface supérieure de la structure en couches ; et
un boîtier (102), dans lequel ledit bloc de cellules de batterie et ladite structure sont agencés ; dans lequel ladite couche électroconductrice est agencée en contact avec le bloc de cellules de batterie pour connecter électriquement la pluralité de cellules de batterie, et ladite couche électroconductrice comprend une pluralité d'ouvertures (130) ;
ledit matériau isolant inclut une pluralité de parties affaiblies ou découpes (112) s'étendant à travers le matériau isolant ;
ladite couche ou ledit revêtement de couverture inclut un matériau résistant à la chaleur et au feu comprenant du mica ou une céramique, et comprend en outre une pluralité de parties affaiblies ou prédécoupes (124) formant des volets (132), un volet étant ouvrable par une augmentation de pression résultant de brûlage d'une cellule de batterie ; et
ladite structure est agencée de telle sorte que, en cas de brûlage d'une cellule (118a) de ladite pluralité de cellules de batterie, un passage de ventilation (116) soit formé par-dessus ladite cellule à travers :
une ouverture de ladite pluralité d'ouvertures dans ladite couche électroconductrice,
une partie affaiblie ou découpe dans ledit matériau isolant, et
un volet ouvert (132a) desdits volets dans la couche ou le revêtement de couverture.

2. Dispositif batterie de la revendication 1, dans lequel ledit matériau isolant a une conductivité thermique qui est inférieure à ou sensiblement égale à 1 W/m·K.

3. Dispositif batterie selon l'une quelconque des revendications précédentes, dans lequel ledit matériau isolant est électro-isolant.

4. Dispositif batterie selon l'une quelconque des revendications précédentes, dans lequel une épaisseur (*h*₁) dudit matériau isolant est dans la plage de 0,5 à 4 mm.

5. Dispositif batterie selon l'une quelconque des revendications précédentes, dans lequel ledit matériau isolant comprend un matériau fluoro-élastomère.

6. Dispositif batterie selon l'une quelconque des revendications précédentes, dans lequel ladite couche ou ledit revêtement de couverture est électro-isolant.

7. Dispositif batterie selon l'une quelconque des revendications précédentes, dans lequel ladite couche ou ledit revêtement de couverture a une épaisseur (*h*₂) de telle sorte que lesdits volets soient ouvrables par une augmentation de pression résultant dudit brûlage de la cellule.

8. Dispositif batterie selon l'une quelconque des revendications précédentes, dans lequel une épaisseur de la couche ou du revêtement de couverture est inférieure à 300 µm.

9. Dispositif batterie selon l'une quelconque des revendications précédentes, dans lequel ladite structure comprend en outre un adhésif (138) pour attacher ledit matériau isolant à ladite couche ou audit revêtement de couverture.

10. Dispositif batterie selon l'une quelconque des revendications précédentes, dans lequel une première face (126) du matériau isolant est agencée en contact physique avec la couche électroconductrice et une seconde face (128), opposée à la première face, est agencée en contact physique avec la couche ou le revêtement de couverture.

11. Dispositif batterie selon l'une quelconque des revendications précédentes, dans lequel ladite structure en couches comprend en outre un adhésif (140) pour attacher ledit matériau isolant à ladite couche électroconductrice.

12. Dispositif batterie selon l'une quelconque des revendications précédentes, dans lequel ladite cellule de ladite pluralité de cellules de batterie comprend un orifice de ventilation (136) adapté pour libérer une pression et/ou un gaz interne ; et dans lequel ledit orifice de ventilation est en communication fluidique avec ledit passage de ventilation.

13. Dispositif batterie selon l'une quelconque des revendications précédentes, dans lequel ladite cellule de ladite pluralité de cellules de batterie comprend une paroi latérale (142) résistante à la chaleur et au feu.

14. Dispositif batterie selon l'une quelconque des revendications précédentes, comprenant en outre un cadre métallique (144), dans lequel
ledit cadre métallique comprend une pluralité de compartiments (146) adaptés pour l'insertion de cellules de batterie individuelles.

15. Dispositif batterie selon la revendication 14, dans lequel ledit cadre métallique comprend un métal ayant une conductivité thermique d'au moins 150 W/m·K.

16. Dispositif batterie selon l'une quelconque des revendications 14 et 15, comprenant en outre un élément de refroidissement (148) agencé en connexion thermique avec ledit cadre métallique.
